# EUROPEAN PATENT SPECIFICATION

(11) **EP 3 631 338 B1**
(45) Date of publication and mention of the grant of the patent: **24.07.2024**
(21) Application number: 18758716.7
(22) Date of filing: 18.05.2018
(51) Int. Cl.: F28D 20/00

(54) **HEAT-STORING APPARATUS WITH SOLID FILLING MATERIAL**
WÄRMESPEICHERNDE VORRICHTUNG MIT FESTEM FÜLLMATERIAL
APPAREIL D'ACCUMULATION DE CHALEUR À MATÉRIAU DE REMPLISSAGE SOLIDE

(30) Priority: 22.05.2017 HU 1700218
(43) Date of publication of application: 08.04.2020
(73) Proprietor: Talabér, Péter, 8400 Ajka (HU)
(72) Inventor: Talabér, Péter, 8400 Ajka (HU)
(74) Representative: Danubia Patent & Law Office LLC
(86) International application number: PCT/HU2018/050020
(87) International publication number: WO 2018/215808

(56) References cited:
- US-A- 4 362 149
- US-A1- 2012 222 415

## Description

The present invention relates to a heat-storing apparatus with solid filling material for storing and economically using the thermal energy produced in a combustion apparatus or other heat sources, wherein the heat-storing apparatus is operable at high temperatures. Said heat-storing apparatus comprises a heat-insulated housing, a particulate or granular solid heat storage medium allowing a gaseous heat transfer medium, preferably air to flow therethrough, wherein said heat storage medium is arranged in the heat-insulated housing. The apparatus further comprises a heat input unit connected to a heat source, and a heat removal unit connected to a heat utilization system, wherein said heat input unit and said heat removal unit are at least in part located within the heat-insulated housing.

Preferably, the thermal energy produced in a combustion apparatus or other heat sources may be stored for later use or for convenience, economical reasons. From the economic point of view, this is advantageous because the heat demand of the area to be heated, and the actual power of the apparatus producing thermal energy may be different in time. This means, for example, that the thermal energy produced has to be continuously discharged from a firebox of a furnace, where fire burns, in order to avoid the risk of explosion and unnecessary burning of the fuel. The modern heating systems tend to keep the area to be heated at a constant temperature. This object is mainly achieved by thermostats in such a way as to detect the temperature of the place to be heated and when the temperature is lower than the target value, the thermostats initiate the heat input, by starting a pump, through the heat dissipation systems designed in different ways (radiator, floor heating, wall heating, fan coil, etc.). Thereby the heat input into the place becomes intermittent. However, for a significant part of the combustion apparatus the intermittent operation required by thermostats cannot be achieved. In order to eliminate this problem, preferably a heat-storing system is used. This heat-storing system transmits the produced heat from the combustion apparatus in the state of heat production to a heat-storing unit, when the thermostat does not indicate the requirement for thermal energy input to the area to be heated. In this way, it is provided that the available thermal energy from the combustion apparatus or other heat source is not wasted and the subsequent use thereof will be possible.

In these systems, the medium for heat transmission and heat transfer is usually water, sometimes supplemented with some glycol mixture. For this reason, the heat storage is also provided in this medium. These heat-storing apparatus are such heat-insulated containers in which the heat input side and the heat removal side are formed in consideration of the thermal stratification of the water. However, the amount of heat storable in water is limited by the relatively low boiling point of the water, which is about 100 degrees Celsius depending on the pressure.

In the regular heat production systems, this heat-storing tank (buffer container) is used in the range of 500-2000 liters. According to these parameters and the heat demand of the area to be heated, it is possible to calculate that in what time period the amount of heat stored in the container can be provided the heat demand of the area to be heated. The amount of stored heat should provide the heat demand in-between two heat input phases. This may be two heat inputs, but in case of solar systems this can be the time between two sunny parts of a day. During the heating phase, water is heated to the highest possible safe temperature (about 100 degrees Celsius) for the maximum possible amount of thermal energy to be stored.

The heat dissipation apparatus of the area to be heated cannot manage temperatures around 100 degrees Celsius under safe conditions and therefore the temperature should be reduced. The temperature of the water flowing into the heat dissipation systems and the heating systems is reduced by means of a mixing valve such that the already cooled water from the heating unit is mixed with the water from the buffer tank by means of a mixing valve. This mixing valve can produce the required outgoing temperature by changing the mixing ratio. For this operation, such a temperature of stored water is required which is higher, but at least the same than the target water temperature, which means 55 to 60 degrees Celsius at a radiator system. As a result, only a part of the amount of energy of 100 degrees Celsius water in the heat-storing tank can be recovered, although a significant amount of the storage capacity is practically used but it is unadaptable for work. The thermal energy of the water having a lower temperature than the outgoing water temperature is no longer usable by this regular method.

Further tasks to be solved for these systems are relatively large space requirements, including the space requirement and the cost of the additional apparatus (expansion tanks, pumps, safety valves, mixing valves, pipe system, etc).

As an effect of problems with water as heat storage medium, the use of other heat storage media were given a trial and various solutions are proposed.

Numerous solutions are known for storing thermal energy with no water. For example, Tibor Borbely's PhD dissertation entitled "The optimal structure of a heat-storing apparatus with solid filling material" published in 2014 ("Pannon University's Ph.D. School of Chemical Engineering and Materials Science") describes in detail number of solutions for the structure of a heat-storing apparatus operated by a solid heat storage medium. The existing heat storage technologies, including liquid, wet and completely solid heat storage solutions are described in the dissertation. Drawbacks of these constructions are that they are submerged into the ground in order to reduce the heat loss. Additionally, there are described regenerators which are operable at high temperatures and the temporary heat storage or the heat exchange is achieved under a relatively short period of time by the exchange of the gaseous heating medium and cooling medium. However, in this case, the different media are alternately supplied around the solid heat storage medium. Mainly, apparatus with higher capacity are discussed in the dissertation, for example which can be used for heating residential parks and factories. Drawbacks of these apparatus are the problem of the small scale implementation for the presented solutions.

In practice, there are also solutions for storing thermal energy in smaller sizes. One of the solutions is covering the already existing heating unit such as an electric heating unit or an iron stove with a heat storage material, preferably with ceramics such as fireclay. A major drawback of the known solutions is that the accumulated thermal energy can only be used locally and the storage life of the thermal energy is short.

The patent application GB 2532485 A discloses a heat-storing apparatus comprising an assembly of parallel tubes with extended outer surfaces thereon, which are embedded in a heat-insulated housing within a filling material formed by solid particles such as sand, gravel, pebbles or a mixture thereof. A heated heat transfer medium, such as compressed air is circulated through the assembly of tubes extending in the housing, wherein by thermal conduction the thermal energy of the heat transfer medium is passed through the tube walls and the tube ribs into the mass of the solid particles and stored therein. The cooled, passed heat transfer medium is stored in high pressure storage reservoirs. Furthermore, beyond the extended outer surface of the tubes, in order to improve the heat transfer, the inner space of the insulated housing is divided into zones and fans are associated with each individual zone. In each individual zone, the fan transversely circulates low pressure air to the tubes through the filling material. The stored heat recovery is carried out by a cold heat transfer medium to flow in the opposite direction through the tubes embedded into the particles forming the heated, solid heat storage medium. The drawback of this apparatus is that it cannot be used directly to heat the heating water of the domestic heating apparatus because the amount of heat cannot be obtained intermittently in correspondence to the actual requirements of the heat utilization system such as a heating system. Alternatively, the high removal temperature can instantly heat the heating water and form vapour, which cannot be passed to the domestic heating tube system.

The document CN 102374809 discloses a heat-storing apparatus similar to the apparatus mentioned above, wherein a heat transfer medium heated by a solar collector is passed through tubes provided with surface-extending element, through an insulated housing. Said insulated housing is filled with low-cost granular solid heat storage material such as magnesium, foamed cement, ceramic, metal sheets, etc.. For thermal energy utilization the heat stored by the above method is discharged by means of a gaseous heat transfer medium flowing in a similarly formed tube. This solution also has the previously mentioned drawbacks and it does not solve the economical and safe storage of the stored heat and the controlled use of the stored heat.

The document US 4,362,149 discloses further a thermal energy storage system and a method for storing substantial quantities of heat for extended periods of time. This thermal energy storage system includes a heat collecting fluid, mainly a liquid alkali metal which is in a heat-exchange relationship with a source of heat or thermal energy, like a solar heat collector, an insulated housing containing a large volume of particulate material such as rocks for the storage of thermal energy, a heat transfer gas, mainly air, in a heat-exchange relationship with the heat-storing rocks, and means for causing the heat collecting fluid and the heat transfer gas to flow in counter-current, indirect heat-exchange relationship with one another. The heat collecting fluid is led mainly in a steam generator, wherein the heat is transferred to a working fluid, mostly water which generates in form of steam mechanical energy. If the solar heat collector generates a surplus of heat quantity over the need of the steam generator, then a part of the heat collecting fluid is led into the insulated housing containing the solid heat-storing medium, where it is returned across a heat exchanger coil back to the solar heat collector. In the insulated housing there is a fan assembly which circulates heat transfer gas, mainly air, downwards in counter-current through the heat exchanger coil containing hot heat collecting fluid, heating in this way the bed of heat-storing rocks. If the need on heat quantity of the steam generator exceeds the capacity of the solar heat collector, the direction of the flow can be reversed in the insulated housing because the fan assembly is provided with a reversible motor and it causes the air to flow upwardly through the heated bed of heat-storing rocks and across the heat exchanger coil.

It is a drawback of this heat-storage system that it does not allow the operating of the heat input unit and the heat removal unit independently from each other in a heat-storing apparatus, i.e. the continuity of the heat input independently from the current heat removal, since the same unit is provided for the heat input and heat output in the insulated housing but with an opposite flow direction. Accordingly, no care is taken for protecting the heat exchanger of the heat input unit against the hot heat-storing medium when no heat is removed by the heat recovery system.

It is an object of the present invention to eliminate the drawbacks of the known solutions and to provide a heat-storing apparatus, which is capable of economically storing large amounts of heat and keeping it for an extended period of time. The thermal energy stored in the heat-storing apparatus at a controlled temperature according to the actual required heat is periodically passable to the heat utilization system such as a heating circuit of a heating apparatus. Alternatively, when no heat is removed, the fluid circuit of the heat utilization system can be protected from unwanted heat transfer, while the heat input into the heat-storing apparatus can be performed continuously, independently from the heat removal.

The invention is based on the idea that the existing heat-storing apparatus with solid filling material have a higher heat-storing capacity at the same volume, and with the same energy input the heat-storing apparatus with solid filling material can safely store thermal energy in a high temperature range to ensure a much higher working ability. Thereby, in the case of closed-loop operation and controlled, intermittent heat dissipation, these heat-storing apparatus are suitable for a long-keeping and economical storing larger amount of thermal energy and optionally discharging it independently of whether heat input is performed or not, while providing protection against overheating.

The above objects are achieved by providing a heat-storing apparatus with solid filling material being operable at high temperatures, preferably at temperatures of several hundred degrees Celsius, said heat-storing apparatus comprising a heat-insulated housing, a gaseous heat transfer medium, preferably a particulate or granular solid heat storage medium allowing air to flow therethrough, said medium being arranged in the heat-insulated housing, said apparatus further comprising a heat input unit connected to a heat source, and a heat removal unit connected to a heat utilization system, wherein said heat input unit and said heat removal unit are at least in part located within the heat-insulated housing, wherein the heat removal unit comprises a heat exchanger within the heat-insulating housing, said heat exchanger being connected to the heat utilization system, wherein the heat exchange between said heat exchanger and the solid heat storage medium is achieved by the heat transfer medium isolated from the ambient air, preferably internal air, which is capable of flowing through the solid heat storage medium, wherein the circulation of said heat transfer medium within the insulated housing is controlled by the rotational speed of a radial blower impeller depending on the thermal energy required by the heat utilization system, said radial blower impeller being arranged inside the insulated housing cooperating with a heat absorption side of the heat exchanger. According to the invention the heat exchanger can be insulated from the heated solid heat storage medium by a thermal shielding unit when no heat is removed by the heat utilization system, wherein said thermal shielding unit has an actuating means and a heat shielding profile element, said actuating means being capable of moving the heat shielding profile element between a closed position and an open position, wherein in the closed position, the heat shielding profile element closes the space surrounding the heat exchanger enclosed by said heat shielding profile element from the ambient air and at the same time opening said surrounding space into the inner space of the heat-storing apparatus, whereas in the open position, the heat shield profile element closes the space surrounding the heat exchanger enclosed by said heat shielding profile element from the inner space of the heat-storing apparatus and at the same time opens said inner space into the ambient air.

In the apparatus according to the present invention, the heat from the heat input unit is completely transferred to the solid heat storage medium because by means of the heat-insulated housing the thermal energy cannot discharge in other ways than the controlled heat output through the heat removal unit. Therefore, the heat is stored in the solid heat storage medium. Due to the use of the solid heat storage material with high melting point, the temperature range of the amount of the stored heat is significantly increasable, and compared to the qualities of water, it provides a much greater ability to work with the substantially same volume by the input of the same amount of heat. When using a solid heat storage medium, the higher temperatures do not mean a higher risk of safety or a change of state of condition, and there is no need for a compensating apparatus due to thermal expansion. In addition, in the apparatus according to the invention, the heat output is simple and controlled by the heat exchanger of the heat removal unit by the rotational speed of the associated radial blower impeller, which rotational speed is proportional with the heat requirement. Whereas when no heat is removed, this heat exchanger can be securely insulated from inside of the heat-storing apparatus to avoid overheating of the fluid contained therein.

In a preferred embodiment of the heat-storing apparatus according to the present invention, the walls of the insulated housing of the heat-storing apparatus are formed by an outer cover, an inner heat-reflecting armour plate and at least one heat-insulating layer arranged between the outer cover and the inner heat-reflecting shield.

In another preferred embodiment of the heat-storing apparatus according to the present invention, the solid heat storage medium is provided in the form of granular or particulate stone, preferably basalt grit. The use of basalt as a solid heat storage medium is advantageous, on the one hand because of its relatively cheap price, on the other hand because the melting point of basalt is between 1000 and 1200 degrees Celsius. Therefore, when using suitable structural materials, it can be safely heated up to several hundred degrees Celsius or even at temperatures close to 1000 degrees Celsius. Thereby, the high temperature operating range can be provided for economical operation required by the invention.

According to a further preferred embodiment of the heat-storing apparatus, the apparatus further comprises control electronics associated with the blower motor of the blower impeller outside the insulated housing for controlling the rotational speed of the blower impeller, said control electronics being configured to compare a target temperature and an actual temperature of the outgoing fluid circuit of the heat utilization system, and wherein said control electronics is electronically connected to a temperature sensor measuring the internal temperature of the heat-storing apparatus and a temperature sensor measuring the actual temperature of the outgoing fluid circuit of the heat utilization system.

In a preferred embodiment of the heat-storing apparatus according to the present invention, the heat input unit of the heat-storing apparatus is formed by a combustion chamber adapted for feeding from outside of the insulated housing and provided with a smoke exhauster. When constructing the combustion chamber of the apparatus, the properties of the respective fuel should be taken into account both physically and combustion-technically views. Due to the respective specialization of the combustion chamber, it will make it possible to use almost all of the available fuels (wood, coal, biomass, pellet, wood chips, earth oil, natural gas, biogas, etc.).

In a further preferred embodiment of the heat-storing apparatus according to the present invention, the heat input unit of the heat-storing apparatus is an electric heating unit, preferably an electric heating wire, arranged inside the insulated housing. In this case, there is no need to form a separate combustion chamber in the apparatus and the heat source can be arranged inside the apparatus at the place of the combustion chamber.

In a further preferred embodiment of the heat-storing apparatus according to the present invention, the heat input unit of the heat-storing apparatus is an external heat input unit, which comprises a tube system adapted for circulating the internal air, said tube system comprising an input heat exchanger, a secondary circulation blower and an external heat source, preferably a solar collector. In this case, there is also no need to form an inner combustion chamber, hence the heat storage medium is heated by means of a closed air circulation system connected to an external heat source.

In a further preferred embodiment of the heat-storing apparatus according to the present invention, the heat removal unit of the heat-storing apparatus comprises the heat exchanger, which is inserted into the fluid circuit of the heat utilization system, in particular a heating apparatus, and adapted for heating the liquid flowing therethrough, wherein the outer surface of said heat exchanger heated by the circulated heated internal air encloses the blower impeller operating at an adjustable rotational speed, and wherein said the heat removal unit further comprises the control electronics controlling the rotational speed of the blower motor operable to rotate the blower impeller.

According to a further preferred embodiment of the heat-storing apparatus, the heat removal unit of the heat-storing apparatus is formed by a Stirling-motor with a carrier gas container. Said carrier gas container has an inner heat exchanger surface and an outer heat exchanger surface, wherein said inner heat exchanger surface for heating the carrier gas is arranged within the heat-insulated housing of the heat-storing apparatus, whereas said outer heat exchanger surface is arranged at the outer side such that the outer heat exchanger surface is cooled. Alternatively the heat input unit may be a combustion chamber, said combustion chamber being suppliable from outside the insulated housing and provided with a smoke exhauster, an electric heating unit, preferably an electric heating wire, arranged inside the insulated housing or an external heat input unit, which comprises a tube system adapted for circulating the internal air. Said tube system has an input heat exchanger, a secondary circulation blower and an external heat source, preferably a solar collector.

The preferred embodiments of the heat-storing apparatus according to the invention will now be described with reference to the drawings, in which:
Figure 1 is a schematic vertical cross-sectional view of a preferred embodiment of the heat-storing apparatus according to the invention,
Figure 2 is a schematic horizontal cross-sectional view of the heat-storing apparatus according to Figure 1,
Figure 3 is a schematic vertical cross-sectional view of another preferred embodiment of the heat-storing apparatus according to the invention,
Figure 4 is a schematic horizontal cross-sectional view of the heat-storing apparatus according to Figure 3,
Figure 5 is a schematic vertical cross-sectional view of a third preferred embodiment of the heat-storing apparatus according to the invention,
Figure 6/a is an embodiment of a thermal shielding unit of the heat-storing apparatus in the closed position, and

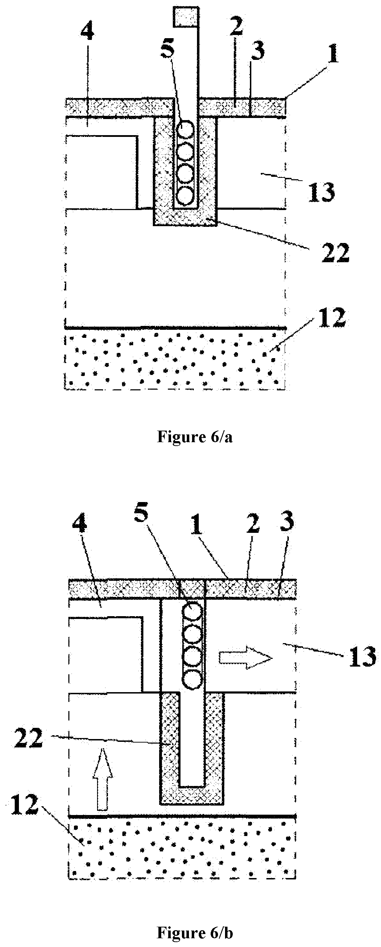

Figure 6/b illustrates the thermal shielding unit in the open position.

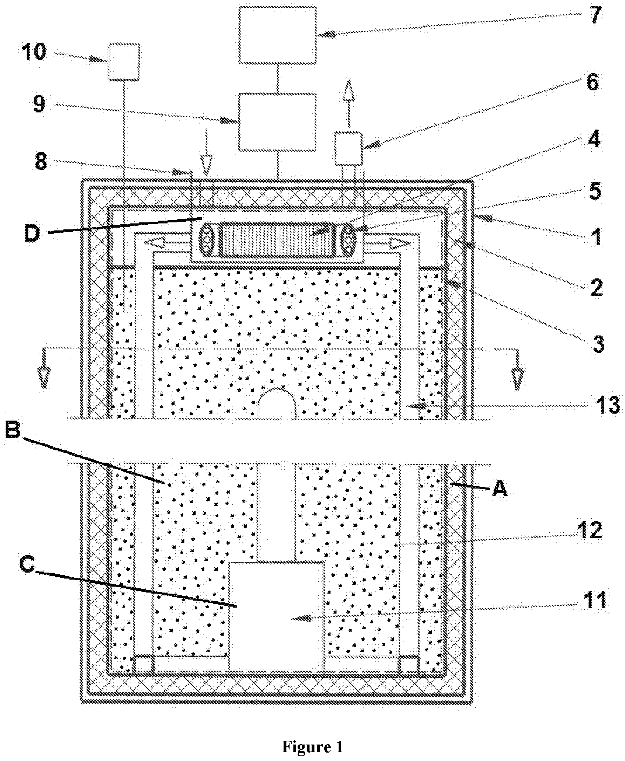

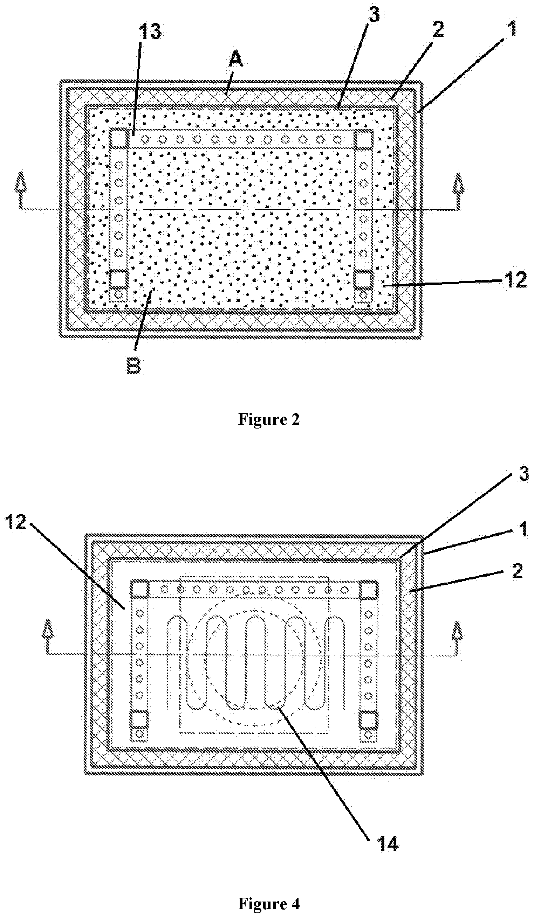

A preferred embodiment of the heat-storing apparatus according to the invention is illustrated in Figure 1 and Figure 2 in vertical and horizontal cross-sectional views. The heat-storing apparatus comprises an heat-insulated housing A, a solid heat storage medium B provided preferably in the form of granular, particulated stone, preferably basalt grit, being arranged in the heat-insulated housing A. The heat-storing apparatus further comprises a heat input unit C and a heat removal unit D. The heat-insulated housing A of the heat-storing apparatus comprises a multilayer wall formed by an outer cover 1, an inner heat-mirroring armour shield 3 and at least one heat-insulating layer 2 arranged between the outer cover 1 and the inner heat-mirroring shield 3 around the solid heat storage medium B such that internal air 12 is isolated from the ambient air. In order to ensure adaptable circulation of the internal air 12, heat-guiding channels 13 are arranged in the heat storage medium B. Alternatively, the heat-guiding channels 13 may be formed by adjacent hollow sections through which the airflow from the pressure side of a radial blower impeller 4 of the heat removal unit D located in the upper part of the heat-storing apparatus is guided into the lower part of the heat-storing apparatus through the openings therein. The heat-storing device may further be provided a temperature sensor 10 for measuring or controlling the temperature of the internal air 12.

In a preferred embodiment of Figures 1 and 2, the heat input unit C is a combustion chamber 11 operated with a solid or gaseous fuel, provided with smoke exhauster, wherein the fuel is supplied from the outside, automatically or by hand, into the combustion chamber 11. Whereas the heat removal unit D comprises a heat exchanger 5 within the heat-insulating housing A, wherein the heat exchanger 5 is connected to the heat utilization system, more specifically to the fluid circuit of the heat utilization system, and adapted for heating the liquid flowing therethrough. The radial blower impeller 4 is enclosed by the heat exchanger 5, and said blower impeller 4 is rotated by a blower motor 9 located outside the heat-insulated housing A. A control electronics 7 is associated with the blower motor 9 of the blower impeller 4 for controlling the rotational speed of the blower impeller 4. Said control electronics 7 being configured to compare a target temperature and an actual temperature of the outgoing fluid circuit of the heat utilization system. The control electronics 7 is electronically connected to a temperature sensor 10 measuring the internal temperature of the heat-storing apparatus and a temperature sensor 6 measuring the actual temperature of the outgoing fluid circuit of the heat utilization system. Thereby the rotational speed of the blower impeller 4 can be controlled based on the difference between the target temperature and the actual temperature of the outgoing fluid detected by the temperature sensor 6. The heat recovery unit D is arranged in the upper part of the heat-storing apparatus in such a way that the internal air 12 circulated by the blower impeller 4 contacts the outer surface of the heat exchanger 5 thereby heating the liquid flowing through the heat exchanger 5. The heat removal unit D further comprises a mechanically movable thermal shielding unit 8. The heat exchanger 5 filled with fluid may be insulated by the thermal shielding unit 8, thereby preventing the fluid contained in the heat exchanger 5 from overheating.

The heat-storing apparatus according to the invention stores the heat in an inner solid heat storage medium B arranged in a heat-insulated housing A until the use of the heat. The heat is transferred through the heat input unit C, preferably an inner combustion chamber 11, to the solid heat storage medium B arranged in the heat-insulated housing A. The thermal energy may be used by the heat removal unit D. The required amount of heat is discharged from the heat-storing apparatus through the heat exchanger 5 of the heat removal unit D such that the speed of the heat-removal is controlled by the inlet air 12 circulated by the blower impeller 4 in such a way that the target external temperature (room temperature) and the heat-removal temperature detected by a temperature sensor 6 are compared by the control electronics 7. The rotation of the blower motor 9 driving the blower impeller 4 is controlled by the control electronics 7 on the basis of the signal difference. The stored thermal energy is discharged when the heating system or other heat utilization system provided by the apparatus requires thermal energy. For example, in case of a heating system based on the signal of a room thermostat, the circulating pump starts to circulate the water in the heating system, therefore the water is also circulated in the heat exchanger 5 of the heat removal unit D. The control electronics 7 receives information about the water temperature through the temperature sensor 6 detecting the outgoing water temperature, and corrects the process based on the value stored in the memory of the control electronics 7. The heat exchanger 5 is not connected to the solid heat storage medium B. There is air between the heat exchanger 5 and the solid heat storage medium B. The air serves as a heat-insulating material when it is not forced to flow. The blower impeller 4 of the blower providing circulation for the internal air 12 exhausts the heated air above the solid heat storage medium B and flows the heated air between the fins of the heat exchanger 5 at a rate adjusted by the control electronics 7 based on the change of the rotational speed of the blower motor 9. The air flowing through the heat exchanger 5 discharges thermal energy to the water flowing in the heat exchanger 5 and then returns to the bottom of the solid heat storage medium B through the air-guiding channels 13. Due to the closed-loop flow, the air continues to flow upward within the structurally particulate, granular medium, while it is warmed up again, and the process starts again.

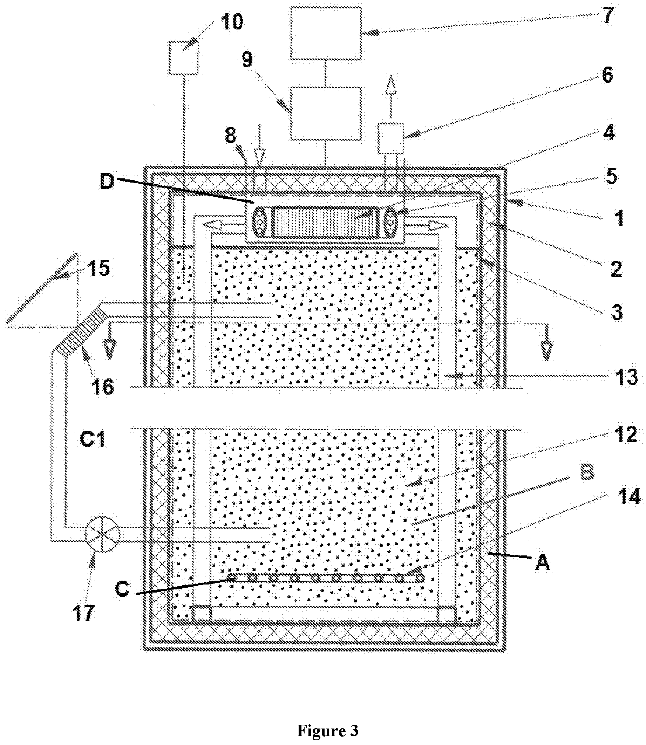

Figures 3 and 4 illustrate another preferred embodiment of the heat-storing apparatus according to the invention in vertical and horizontal cross-sectional views, wherein the heat input unit C is formed by an electric heating wire 14 or an external heat input unit C1. The external heat input unit C1 comprises a tube system with an input heat exchanger 16 adapted for circulating the internal air 12, a secondary circulation blower 17 and a heat source 15, preferably a solar collector. The heat removal unit D also comprises a heat exchanger 5 connected to the fluid circuit of the heating apparatus, wherein the heat exchanger 5 is enclosed by the blower impeller 4 rotated by the blower motor 9. A control electronics 7 is also associated with the blower motor 9 of the blower impeller 4 for controlling the rotational speed of the blower impeller 4, said control electronics 7 being configured to compare a target temperature and an actual temperature of the outgoing fluid circuit of the heat utilization system. The control electronics 7 is electronically connected to a temperature sensor 10 measuring the internal temperature of the heat-storing apparatus and a temperature sensor 6 measuring the actual temperature of the outgoing fluid circuit of the heat utilization system. By means of these sensors the control electronics 7 controls the rotational speed of the blower impeller 4 based on the difference between the actual temperature of the outgoing fluid and the target temperature. The heat removal unit D is arranged in the upper part of the heat-storing apparatus such that the internal air 12 circulated by the blower impeller 4 passes beside the outer surface of the heat exchanger 5, thereby the fluid flowing through the heat exchanger 5 is heated. The heat removal unit D further comprises a mechanically movable thermal shielding unit 8. When it is necessary, the thermal shielding unit 8 can insulate the heat exchanger 5 filled with fluid, thereby the overheating of the fluid is prevented in the heat utilization system. The thermal shielding unit 8 substantially comprises a heat shielding profile element 22 and a known actuating means, said actuating means being capable of moving the heat shielding profile element 22. The heat shielding profile element 22 is adjustable between a closed position (Fig. 6/b) and an open position (Fig. 6/a). In the closed position, the heat shielding profile element 22 is configured to close the space surrounding the heat exchanger 5 enclosed by the heat shielding profile element 22 from the ambient air and at the same time open the surrounding space into the inner space of the heat-storing apparatus. Whereas in open the position, the heat shield profile element 22 closes the space surrounding the heat exchanger 5 enclosed by said heat shielding profile element from the inner space of the heat-storing apparatus and at the same time opens said inner space into the ambient air.

The heat-storing apparatus according to the invention stores the heat in the solid heat storage medium B arranged in the heat-insulated housing A until later use of the heat. The heat is transferred through the heat input unit C to the solid heat storage medium B arranged in the heat-insulated housing A. The heat input unit C may preferably be any of the electric heating wire 14 or the external heat input unit C 1. Thermal heat energy may be used by means of the heat removal unit D. The structure and the operation of the heat removal unit D is similar to the structure and the operation of the preceding embodiments.

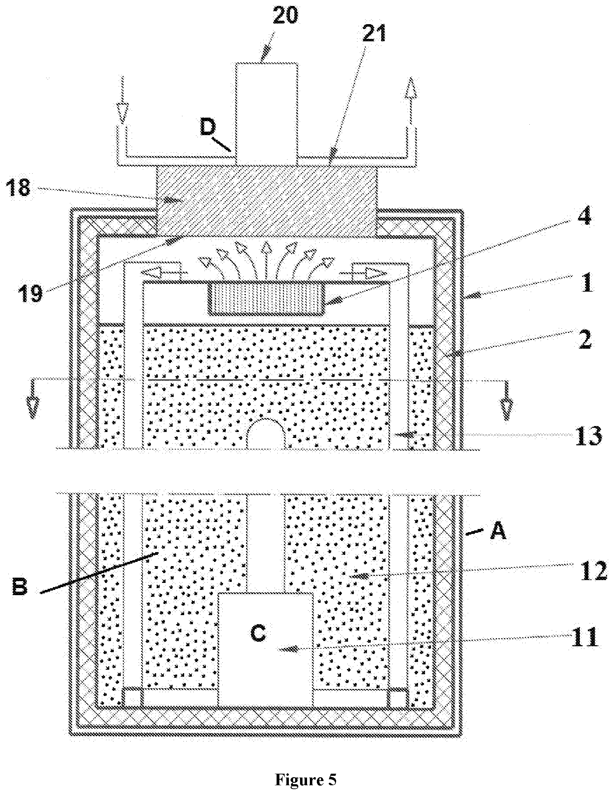

Figure 5 illustrates another preferred embodiment of the heat-storing apparatus of the present invention in a vertical cross-sectional view, wherein the heat input unit C is a combustion chamber 11 operated with a solid or gaseous fuel, provided with smoke exhauster, wherein the fuel is supplied from the outside, automatically or manually, into the combustion chamber 11. In this case the heat removal unit D is a Stirling-motor 20 with a working gas container 18, wherein the working gas container 18 has an inner heat exchanger surface 19 and an outer heat exchanger surface 21. The heat exchanger surface 19 for heating the working gas is arranged within the heat-insulated housing A of the heat-storing apparatus, whereas the outer heat exchanger surface 21 is arranged at the outer side such that the outer heat exchanger surface 21 is cooled. The heat removal unit further comprises a blower impeller 4 for circulating the internal air 12.

Preferred embodiments of the invention may also be arranged in an outer water jacket to use the residual heat loss.

The heat-storing apparatus according to the invention stores the heat in the solid heat storage medium B arranged in the heat-insulated housing A until later use of the heat. The heat is transferred through a heat input unit C to the solid heat storage medium B arranged in the heat-insulated housing A. The heat input unit C may preferably be any of a combustion chamber 11, an electric heating wire 14 or an external heat input unit C1. Thermal heat energy may be used by a heat removal unit D when it is necessary. The heat removal unit D may optionally be a Stirling-motor 20 having a working gas container 18. The working gas container 18 is configured to extend the covering of the heat-insulated housing A, wherein the inner heat exchanger surface 19 is heated by means of the stored thermal energy, whereas the outer heat exchanger surface 21 is cooled.

An advantage of the heat-storing apparatus according to the invention is that until usage the required excess amount of heat can be stored securely, at high temperatures providing a high degree of workability and a minimum heat loss. Additionally, in intermittent mode the heat-storing apparatus can discharge the stored thermal energy intermittently in correspondence to the respective heat demand without the risk of overheating the heated liquid.

Another advantage of the heat-storing device according to the invention is that the amount of heat to be stored per unit volume is increased, therefore it can also be used in household conditions with the same functions.

## Claims

1. A heat-storing apparatus with solid filling material for storing thermal energy for use in a heating apparatus or other heat utilization system, said heat-storing apparatus being operable at high temperatures, preferably at temperatures of several hundred degrees Celsius, said heat-storing apparatus comprising a heat-insulated housing (A), a particulate or granular solid heat storage medium (B) allowing a gaseous heat transfer medium, preferably air to flow therethrough, said head storage medium being arranged in the heat-insulated housing (A), the apparatus further comprising a heat input unit (C) connected to a heat source, and a heat removal unit (D) connected to a heat utilization system, wherein said heat input unit (C) and said heat removal unit (D) are at least in part located within the heat-insulated housing (A), wherein the heat removal unit (D) comprises a heat exchanger (5) within the heat-insulating housing (A), said heat exchanger being connected to the heat utilization system, wherein the heat exchange between said heat exchanger (5) and the solid heat storage medium (B) is achieved by the heat transfer medium isolated from the ambient air, preferably internal air (12), which is capable of flowing through the solid heat storage medium (B), wherein the circulation of said heat transfer medium within the insulated housing (A) is controlled by the rotational speed of a radial blower impeller (4) depending on the thermal energy required by the heat utilization system, said radial blower impeller being arranged inside the insulated housing (A) cooperating with a heat absorption side of the heat exchanger (5), **characterized in that** the heat exchanger (5) can be insulated from the heated solid heat storage medium (B) by a thermal shielding unit (8) when no heat is removed by the heat utilization system, wherein said thermal shielding unit (8) has an actuating means and a heat shielding profile element (22), said actuating means being capable of moving the heat shielding profile element (22) between a closed position and an open position, wherein in the closed position, the heat shielding profile element (22) closes the space surrounding the heat exchanger (5) enclosed by said heat shielding profile element from the ambient air and at the same time opening said surrounding space into the inner space of the heat-storing apparatus, whereas in the open position, the heat shield profile element (22) closes the space surrounding the heat exchanger (5) enclosed by said heat shielding profile element from the inner space of the heat-storing apparatus and at the same time opens said inner space into the ambient air.

2. The heat-storing apparatus according to claim 1, **characterized in that** the heat removal unit (D) of the heat-storing apparatus comprises the heat exchanger (5), which is inserted into the fluid circuit of the heat utilization system, in particular a heating apparatus, and adapted for heating the liquid flowing therethrough, wherein the outer surface of said heat exchanger heated by the circulated heated internal air (12) encloses the blower impeller (4) operating at an adjustable rotational speed, and wherein said the heat removal unit (D) further comprises the control electronics (7) controlling the rotational speed of the blower motor (9) operable to rotate the blower impeller (4).

3. The heat-storing apparatus according to claim 2, **characterized in that** the apparatus further comprises control electronics (7) associated with the blower motor (9) of the blower impeller (4) outside the insulated housing (A) for controlling the rotational speed of the blower impeller (4), said control electronics being configured to compare a target temperature and an actual temperature of the outgoing fluid circuit of the heat utilization system, and wherein said control electronics is electronically connected to a temperature sensor (10) measuring the internal temperature of the heat-storing apparatus and a temperature sensor (6) measuring the actual temperature of the outgoing fluid circuit of the heat utilization system.

4. The heat-storing apparatus according to claim 1, **characterized in that** the heat removal unit (D) of the heat-storing apparatus is formed by a Stirling-motor (20) with a working gas container (18), said working gas container (18) has an inner heat exchanger surface (19) and an outer heat exchanger surface (21), wherein said inner heat exchanger surface (19) for heating the carrier gas is arranged within the heat-insulated housing (A) of the heat-storing apparatus, whereas said outer heat exchanger surface (21) is arranged at the outer side, such that the outer heat exchanger surface (21) is cooled.

5. The heat-storing apparatus according to any one of claims 1 to 4, **characterized in that** the heat input unit (C) of the heat-storing apparatus is formed by a combustion chamber (11) adapted for feeding from outside of the insulated housing (A) and provided with a smoke exhauster.

6. The heat-storing apparatus according to any one of claims 1 to 4, **characterized in that** the heat input unit (C) of the heat-storing apparatus is an electric heating unit (14), preferably an electric heating wire, arranged inside the insulated housing (A).

7. The heat-storing apparatus according to any one of claims 1 to 4, **characterized in that** the heat input unit (C) of the heat-storing apparatus is an external heat input unit (C1), which comprises a tube system adapted for circulating the internal air (12), said tube system comprising an input heat exchanger (16), a secondary circulation blower (17) and an external heat source (15), preferably a solar collector.

8. The heat-storing apparatus according to any one of claims 1 to 7, **characterized in that** the walls of the insulated housing (A) of the heat-storing apparatus are formed by an outer cover (1), an inner heat-mirroring armour shield (3) and at least one heat-insulating layer (2) arranged between the outer cover (1) and the inner heat-mirroring shield (3).

9. The heat-storing apparatus according to any one of claims 1 to 8, **characterized in that** the solid heat storage medium (B) is provided in the form of basalt grit.

## Patentansprüche

1. Wärmespeichereinrichtung mit festem Füllmaterial zum Speichern von Wärmeenergie, zur Verwendung in einer Heizvorrichtung oder einem anderen Wärmenutzungsssystem, wobei diese Wärmespeichereinrichtung bei hohen Temperaturen, vorzugsweise bei Temperaturen von mehreren hundert Grad Celsius, betrieben werden kann, umfassend ein wärmeisoliertes Gehäuse (A), ein im wärmeisolierten Gehäuse (A) angeordnetes, partikelförmiges oder körniges festes Wärmespeichermedium (B), das von einem gasförmigen Wärmeübertragungsmedium, vorzugsweise von Luft, durchströmt werden kann, wobei die Wärmespeichereinrichtung weiterhin eine mit einer Wärmequelle verbundene Wärmezufuhreinheit (C) und eine mit einem Wärmenutzungsssystem verbundene Wärmeabfuhreinheit (D) umfasst, wobei die Wärmezufuhreinheit (C) und die Wärmeabfuhreinheit (D) mindestens teilweise innerhalb des wärmeisolierten Gehäuses (A) angeordnet sind, wobei die Wärmeabfuhreinheit (D) einen Wärmetauscher (5) innerhalb des wärmeisolierten Gehäuses (A) aufweist, wobei der Wärmetauscher mit dem Wärmenutzungssystem verbunden ist, wobei der Wärmeaustausch zwischen dem Wärmetauscher (5) und dem festen Wärmespeichermedium (B) durch das von der Umgebung isolierte gasförmige Wärmeübertragungsmedium, vorzugsweise Innenluft (12), erreicht wird, das das feste Wärmespeichermedium (B) durchströmen kann, wobei die Zirkulation des Wärmeübertragungsmediums innerhalb des isolierten Gehäuses (A) durch die Drehzahl eines mit einer Wärmeaufnahmeseite des Wärmetauschers (5) zusammenwirkenden und innerhalb des isolierten Gehäuses (A) angeordneten Radialgebläselaufrads (4) in Abhängigkeit von der vom Wärmenutzungssystem benötigten Wärmeenergie gesteuert wird, **dadurch gekennzeichnet, dass** der Wärmetauscher (5) durch eine thermische Abschirmeinheit (8) gegenüber dem erhitzten festen Wärmespeichermedium (B) isolierbar ist, wenn keine Wärme durch das Wärmenutzungssystem abgeführt wird, wobei die Wärmeabschirmeinheit (8) ein Betätigungsteil und ein Wärmeabschirmprofilelement (22) aufweist, wobei das Betätigungsteil in der Lage ist, das Wärmeabschirmprofilelement (22) zwischen einer Schließstellung und einer Offenstellung zu bewegen, wobei das Wärmeabschirmprofilelement (22) in der Schließstellung den von ihm umschlossenen Raum um den Wärmetauscher (5) gegenüber der Umgebungsluft abschließt und gleichzeitig diesen Raum in den Innenraum der Wärmespeichereinrichtung öffnet, während das Wärmeabschirmprofilelement (22) in der geöffneten Stellung den von ihm umschlossenen Raum um den Wärmetauscher (5) gegenüber dem Innenraum der Wärmespeichervorrichtung abschließt und gleichzeitig in die Umgebungsluft öffnet.

2. Wärmespeichervorrichtung nach Anspruch 1, **dadurch gekennzeichnet, dass** die Wärmeabfuhreinheit (D) der Wärmespeichereinrichtung den Wärmetauscher (5) umfasst, der in den Fluidkreislauf des Wärmenutzungssystems, insbesondere einer Heizung, eingefügt ist und zum Erhitzen der das Wärmenutzungssystem durchströmenden Flüssigkeit geeignet ist, wobei die Außenfläche des Wärmetauschers, die durch die zirkulierte erwärmte Innenluft (12) erwärmt wird, das Gebläserad (4) umschließt, das mit einer einstellbaren Drehzahl arbeitet, und wobei die Wärmeabfuhreinheit (D) weiterhin die Steuerelektronik (7) umfasst, die die Drehzahl des Gebläsemotors (9) steuert, der so betreibbar ist, dass er das Gebläserad (4) dreht.

3. Wärmespeichereinrichtung nach Anspruch 2, **dadurch gekennzeichnet, dass** die Wärmespeichereinrichtung außerdem eine Steuerelektronik (7) umfasst, die dem Gebläsemotor (9) des Gebläselaufrads (4) außerhalb des isolierten Gehäuses (A) zugeordnet ist, um die Drehzahl des Gebläselaufrades (4) zu steuern, wobei die Steuerelektronik so konfiguriert ist, dass sie eine Solltemperatur und eine tatsächliche Temperatur des ausgehenden Fluidkreislaufs des Wärmenutzungssystems vergleicht, und wobei die Steuerelektronik elektronisch mit einem Temperatursensor (10) verbunden ist, der die Innentemperatur der Wärmespeichereinrichtung misst, und mit einem Temperatursensor (6), der die tatsächliche Temperatur des ausgehenden Flüssigkeitskreislaufs des Wärmenutzungssystems misst.

4. Wärmespeichervorrichtung nach Anspruch 1, **dadurch gekennzeichnet, dass** die Wärmeabfuhreinheit (D) der Wärmespeichereinrichtung durch einen Stirling-Motor (20) mit einem Arbeitsgasbehälter (18) ausgebildet ist, wo dieser Arbeitsgasbehälter (18) eine innere Wärmetauscherfläche (19) und eine äußere Wärmetauscherfläche (21) aufweist, wobei die innere Wärmetauscherfläche (19) zur Erwärmung des Arbeitsgases innerhalb des wärmeisolierten Gehäuses (A) der Wärmespeichereinrichtung angeordnet ist, während die äußere Wärmetauscherfläche (21) an der Außenseite angeordnet ist, so dass die äußere Wärmetauscherfläche (21) gekühlt wird.

5. Wärmespeichereinrichtung nach einem der Ansprüche 1 bis 4, **dadurch gekennzeichnet, dass** die Wärmezufuhreinheit (C) der Wärmespeichereinrichtung durch eine Brennkammer (11) ausgebildet ist, die von außerhalb des isolierten Gehäuses (A) gespeist werden kann und mit einem Rauchabzug ausgestattet ist.

6. Wärmespeichereinrichtung nach einem der Ansprüche 1 bis 4, **dadurch gekennzeichnet, dass** die Wärmezufuhreinheit (C) der Wärmespeichereinrichtung eine im isolierten Gehäuse (A) angeordnete elektrische Heizeinheit (14), vorzugsweise ein elektrischer Heizdraht, ist.

7. Wärmespeichereinrichtung nach einem der Ansprüche 1 bis 4, **dadurch gekennzeichnet, dass** die Wärmezufuhreinheit (C) der Wärmespeichereinrichtung eine externe Wärmezufuhreinheit (C1) ist, die ein Rohrsystem zur Zirkulation der Innenluft (12) aufweist, wobei das Rohrsystem einen Einfuhr-Wärmetauscher (16), ein sekundäres Zirkulationsgebläse (17) und eine externe Wärmequelle (15), vorzugsweise einen Solarkollektor, umfasst.

8. Wärmespeichereinrichtung nach einem der Ansprüche 1 bis 7, **dadurch gekennzeichnet, dass** die Wände des isolierten Gehäuses (A) der Wärmespeichereinrichtung aus einer Außenhülle (1), einem inneren wärmespiegelnden Panzerschild (3) und mindestens einer zwischen der Außenhülle (1) und dem inneren wärmespiegelnden Panzerschild (3) angeordneten Wärmedämmschicht (2) ausgebildet sind.

9. Wärmespeichervorrichtung nach einem der Ansprüche 1 bis 8, **dadurch gekennzeichnet, dass** das feste Wärmespeichermedium (B) in Form von Basaltschotter vorliegt.

## Revendications

1. Dispositif de stockage de chaleur à matière de remplissage solide pour stocker de l'énergie thermique destinée à être utilisée dans un dispositif de chauffage ou autre système d'utilisation de chaleur, ledit dispositif de stockage de chaleur pouvant fonctionner à des températures élevées, de préférence à des températures de plusieurs centaines de degrés Celsius, ledit dispositif de stockage de chaleur comprenant une enceinte (A) isolée thermiquement, un agent accumulateur de chaleur solide (B) particulaire ou granulaire pouvant être traversé par un agent caloporteur, de préférence par de l'air, ledit dispositif de stockage de chaleur comprenant en outre une unité d'apport de chaleur (C) connectée à une source de chaleur, et une unité d'évacuation de chaleur (D) connectée à un système d'utilisation de chaleur, dans lequel ladite unité d'apport de chaleur (C) et ladite unité d'évacuation de chaleur (D) sont situées au moins en partie à l'intérieur de l'enceinte (A) isolée thermiquement, dans lequel l'unité d'évacuation de chaleur (D) comprend un échangeur de chaleur (5) à l'intérieur de l'enceinte (A) isolée thermiquement, ledit échangeur de chaleur étant connecté au système d'utilisation de chaleur, dans lequel l'échange thermique entre ledit échangeur de chaleur (5) et l'agent accumulateur de chaleur solide (B) est réalisé par l'agent caloporteur gazeux, de préférence l'air intérieur (12), isolé de l'environnement, qui est capable de circuler à travers l'agent accumulateur de chaleur solide (B), dans lequel la circulation dudit agent caloporteur à l'intérieur de l'enceinte (A) isolée thermiquement est contrôlée par la vitesse de rotation d'une turbine de ventilateur (4) radiale en fonction de l'énergie thermique requise par le système d'utilisation de chaleur, ladite turbine de ventilateur radiale étant disposée à l'intérieur de l'enceinte (A) isolée thermiquement et coopérant avec un côté de l'échangeur de chaleur (5) absorbant la chaleur, **caractérisé en ce que** l'échangeur de chaleur (5) peut être isolé par une unité de protection thermique (8) de l'agent accumulateur de chaleur solide (B) chauffé lorsque la chaleur n'est pas évacuée par le système d'utilisation de chaleur, dans lequel ladite unité de protection thermique (8) comporte un moyen d'actionnement et un élément profilé de protection thermique (22), ledit moyen d'actionnement étant capable de déplacer l'élément profilé de protection thermique (22) entre une position fermée et une position ouverte, l'élément profilé de protection thermique (22) en position fermée fermant vis-à-vis de l'air ambiant l'espace entourant l'échangeur de chaleur (5) entouré par ledit élément profilé de protection thermique et en même temps ouvrant ledit espace environnant sur l'espace intérieur du dispositif de stockage de chaleur, tandis qu'en position ouverte, l'élément profilé de protection thermique (22) ferme vis-à-vis de l'espace intérieur du dispositif de stockage de chaleur l'espace entourant l'échangeur de chaleur (5) entouré par ledit élément profilé de protection thermique et en même temps ouvre ledit espace intérieur sur l'air ambiant.

2. Dispositif de stockage de chaleur selon la revendication 1, **caractérisé en ce que** l'unité d'évacuation de chaleur (D) du dispositif de stockage de chaleur comprend l'échangeur de chaleur (5), qui est inséré dans le circuit fluidique du système d'utilisation de chaleur, en particulier d'un dispositif de chauffage, et est adapté pour chauffer le liquide circulant à travers le système d'utilisation de chaleur, dans lequel la surface externe dudit échangeur de chaleur chauffée par l'air intérieur (12) en circulation chauffé renferme la turbine de ventilateur (4) fonctionnant à une vitesse de rotation réglable, et dans lequel ladite unité d'évacuation de chaleur (D) comprend en outre l'électronique de commande (7) commandant la vitesse de rotation du moteur de ventilateur (9) utilisable pour faire tourner la turbine de ventilateur (4).

3. Dispositif de stockage de chaleur selon la revendication 2, **caractérisé en ce que** le dispositif comprend en outre l'électronique de commande (7) associée au moteur de ventilateur (9) de la turbine de ventilateur (4) à l'extérieur de l'enceinte (A) isolée pour contrôler la vitesse de rotation de la turbine de ventilateur (4), ladite électronique de commande étant configurée pour comparer une température cible et une température réelle du circuit fluidique sortant du système d'utilisation de chaleur, et dans lequel ladite électronique de commande est connectée électroniquement à un capteur de température (10) mesurant la température interne du dispositif de stockage de chaleur et à un capteur de température (6) mesurant la température réelle du circuit fluidique sortant du système d'utilisation de chaleur.

4. Dispositif de stockage de chaleur selon la revendication 1, **caractérisé en ce que** l'unité d'évacuation de chaleur (D) du dispositif de stockage de chaleur est constituée d'un moteur Stirling (20) pourvu d'un réservoir de gaz de travail (18), ledit réservoir de gaz de travail (18) comportant une surface interne d'échange de chaleur (19) et une surface externe d'échange de chaleur (21), dans lequel ladite surface interne d'échange de chaleur (19) destinée à chauffer le gaz de travail est agencée à l'intérieur de l'enceinte (A) isolée thermiquement du dispositif de stockage de chaleur, tandis que ladite surface externe d'échange de chaleur (21) est disposée sur le côté externe, de telle sorte que la surface externe d'échange de chaleur (21) est refroidie.

5. Dispositif de stockage de chaleur selon l'une quelconque des revendications 1 à 4, **caractérisé en ce que** l'unité d'apport de chaleur (C) du dispositif de stockage de chaleur est constituée d'une chambre de combustion (11) adaptée pour être alimentée de l'extérieur de l'enceinte (A) isolée thermiquement et munie d'un dispositif d'évacuation de fumée.

6. Dispositif de stockage de chaleur selon l'une quelconque des revendications 1 à 4, **caractérisé en ce que** l'unité d'apport de chaleur (C) du dispositif de stockage de chaleur est une unité de chauffage électrique (14), de préférence un fil électrique chauffant, disposée à l'intérieur de l'enceinte (A) isolée thermiquement.

7. Dispositif de stockage de chaleur selon l'une quelconque des revendications 1 à 4, **caractérisé en ce que** l'unité d'apport de chaleur (C) du dispositif de stockage de chaleur est une unité d'apport de chaleur externe (C1), qui comprend un système de tubes adapté pour faire circuler l'air intérieur (12), ledit système de tubes comprenant un échangeur de chaleur d'entrée (16), un ventilateur de circulation secondaire (17) et une source de chaleur externe (15), de préférence un capteur solaire.

8. Dispositif de stockage de chaleur selon l'une quelconque des revendications 1 à 7, **caractérisé en ce que** les parois de l'enceinte (A) isolée thermiquement du dispositif de stockage de chaleur sont constituées d'une enveloppe externe (1), d'un blindage interne (3) réfléchissant la chaleur et d'au moins une couche (2) d'isolation thermique disposée entre l'enveloppe externe (1) et le blindage interne (3) réfléchissant la chaleur.

9. Dispositif de stockage de chaleur selon l'une quelconque des revendications 1 à 8, **caractérisé en ce que** l'agent accumulateur de chaleur solide (B) se présente sous forme de basalte concassé.
